# EUROPEAN PATENT APPLICATION

(11) **EP 4 763 548 A1**
(43) Date of publication of application: **24.06.2026**
(21) Application number: 25220702.2
(22) Date of filing: 04.12.2025
(51) Int. Cl.: B60H 1/00, B60L 3/00

(54) **VEHICLE AND CONTROL METHOD**

(30) Priority: 23.12.2024 JP 2024225985; 08.05.2025 JP 2025078123
(71) Applicant: Toyota Jidosha Kabushiki Kaisha, Toyota-shi, Aichi-ken 471-8571 (JP)
(72) Inventor: TOMITA, Shintaro, Toyota-shi 471-8571 (JP); ISHISHITA, Teruo, Toyota-shi 471-8571 (JP); KAMESAKI, Daisuke, Toyota-shi 471-8571 (JP)
(74) Representative: D Young & Co LLP

(57) **Abstract**

An electrically powered vehicle (100) includes a vehicle body, a battery module (50), a hydrogen sulfide sensor (70), an air conditioner (170), and an ECU (150). When the hydrogen sulfide sensor (70) detects generation of a gas or detects that the generation of the gas is predicted, the ECU (150) reduces an amount of airflow from the air conditioner (170) as compared to that in a comparative state. The comparative state includes a state in which the hydrogen sulfide sensor (70) does not detect the generation of the gas.

## Description

### CROSS REFERENCE TO RELATED APPLICATIONS

This nonprovisional application is based on Japanese Patent Application No. 2024-225985 filed on December 23, 2024 and Japanese Patent Application No. 2025-078123 filed on May 8, 2025, with the Japan Patent Office, the entire contents of which are hereby incorporated by reference.

### BACKGROUND

### Field

The present disclosure relates to a vehicle and a method for controlling a vehicle.

### Description of the Background Art

Japanese Patent Laying-Open No. 2024-127556 discloses that, in a vehicle on which an all-solid-state battery housed in a case is mounted, a blocking process is performed to separate the inside of a vehicle compartment from outside air when a gas is generated in the case. As an exemplary blocking process, Japanese Patent Laying-Open No. 2024-127556 discloses a process of switching an air circulation path to an inside air circulation path by an air conditioner.

### SUMMARY

However, if the switching to the inside air circulation path is made suddenly during operation of the air conditioner, the generated gas may enter the vehicle compartment due to a difference in air pressure.

One of the causes for the difference in air pressure may be that a negative pressure is generated between a valve that blocks the outside air and a fan disposed in the air conditioner. As a result, the generated gas may flow in through a gap formed by the valve that blocks the outside air.

The present disclosure has been made to solve the above-described problem, and an object of the present disclosure is to provide a vehicle and a control method capable of suppressing entry of a gas generated from a power storage device into a vehicle compartment.

A vehicle according to a first aspect of the present disclosure includes: a vehicle body; a power storage device mounted on the vehicle body; a detection device that detects generation of a gas from the power storage device; an air conditioner that adjusts an amount of airflow in a vehicle compartment, and switches an operation mode between an inside air mode of circulating air in the vehicle compartment and an outside air mode of taking outside air into the vehicle compartment; and a controller. When the detection device detects the generation of the gas, the controller is configured to switch the operation mode to the inside air mode, after setting an amount of airflow from the air conditioner to be equal to or lower than a specified value or after stopping the airflow.

A vehicle according to a second aspect of the present disclosure includes: a vehicle body; a power storage device mounted on the vehicle body; a detection device that detects generation of a gas from the power storage device or detects that the generation of the gas is predicted; an air conditioner that adjusts an amount of airflow in a vehicle compartment; and a controller. When the detection device detects the generation of the gas or detects that the generation of the gas is predicted, the controller is configured to reduce an amount of airflow from the air conditioner as compared to that in a comparative state. The comparative state includes a state in which the detection device does not detect the generation of the gas.

A vehicle according to a third aspect of the present disclosure includes: a vehicle body; a power storage device mounted on the vehicle body; a detection device that detects generation of a gas from the power storage device or detects that the generation of the gas is predicted; an air conditioner that adjusts an amount of airflow in a vehicle compartment and adjusts an amount of outside air to be taken into the vehicle compartment; and a controller. When the detection device detects the generation of the gas or detects that the generation of the gas is predicted, the controller is configured to reduce the amount of outside air to be taken into the vehicle compartment, after setting an amount of airflow from the air conditioner to be equal to or lower than a specified value or after stopping the airflow.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a configuration of an electrically powered vehicle according to an embodiment.
Fig. 2 is a perspective view showing a configuration of a battery case according to an embodiment.
Fig. 3 is a cross-sectional view taken along line III-III in Fig. 2.
Fig. 4 shows a configuration of an air conditioner according to an embodiment.
Fig. 5 shows an exemplary setting of the air conditioner.
Fig. 6 is a flowchart showing an exemplary process performed by an ECU.
Fig. 7 shows a state of the air conditioner before an amount of airflow is changed.
Fig. 8 shows a state of the air conditioner after the amount of airflow is changed.
Fig. 9 is a flowchart showing an exemplary process performed by the ECU.
Fig. 10 shows a state of the air conditioner after the amount of airflow is changed.
Fig. 11 is a flowchart showing an exemplary process performed by the ECU.
Fig. 12 shows a state of the air conditioner before the amount of airflow is changed.
Fig. 13 shows a state of the air conditioner after the amount of airflow is changed.
Fig. 14 is a flowchart showing an exemplary process performed by the ECU.
Fig. 15 shows a state of the air conditioner after the amount of airflow is changed.
Fig. 16 is a flowchart showing an exemplary process performed by the ECU.
Fig. 17 shows a state of the air conditioner after the amount of airflow is changed.
Fig. 18 is a flowchart showing an exemplary process performed by the ECU.

### DESCRIPTION OF THE PREFERRED EMBODIMENTS

Embodiments of the present disclosure will be hereinafter described in detail with reference to the drawings. In the drawings, the same or corresponding parts are denoted by the same reference characters, and description thereof will not be repeated.

### (First Embodiment)

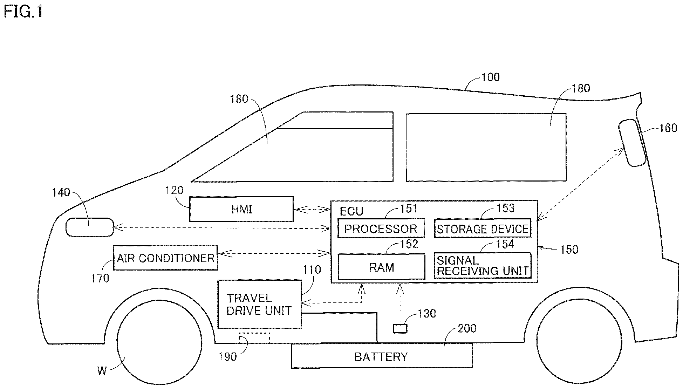

Fig. 1 schematically shows an overall configuration of an electrically powered vehicle 100 on which a battery system is mounted according to the present embodiment. Electrically powered vehicle 100 includes a battery 200 that stores electric power for traveling. Electrically powered vehicle 100 is configured to be capable of traveling with electric power stored in battery 200. Although electrically powered vehicle 100 is a battery electric vehicle (BEV) without an engine (internal combustion engine) in the present embodiment, electrically powered vehicle 100 may be a hybrid electric vehicle (HEV) or a plug-in hybrid electric vehicle (PHEV) with an engine. Note that electrically powered vehicle 100 is an example of "vehicle" of the present disclosure.

Electrically powered vehicle 100 includes a controller (ECU: Electronic Control Unit) 150. ECU 150 is configured to perform charging control and discharging control for battery 200. ECU 150 includes a processor 151, a RAM (Random Access Memory) 152, a storage device 153, and a signal receiving unit 154. Note that ECU 150 is an example of "controller" of the present disclosure.

ECU 150 may be a computer. Processor 151 may be a CPU (Central Processing Unit). RAM 152 functions as a working memory that temporarily stores data to be processed by processor 151.

Storage device 153 is configured to be capable of storing stored information. Storage device 153 stores a program as well as information (for example, maps, mathematical expressions, and various parameters) to be used for the program. When processor 151 executes the program stored in storage device 153, various types of control in ECU 150 are performed.

Signal receiving unit 154 receives a predetermined signal from another device of ECU 150. For example, signal receiving unit 154 receives, from a hydrogen sulfide sensor 70 described later, information (signal) indicating that hydrogen sulfide has been generated in a battery case 90.

A monitoring module 130 includes various sensors that detect a state (for example, voltage, current, and temperature) of battery 200, and outputs a result of detection to ECU 150. Monitoring module 130 may be a BMS (Battery Management System) having an SOC (State Of Charge) estimating function, an SOH (State Of Health) estimating function, a cell voltage equalizing function, a diagnostic function, and a communication function, in addition to the functions of the sensors described above. ECU 150 can obtain the state (for example, temperature, current, voltage, SOC, and internal resistance) of battery 200 based on the output from monitoring module 130. Note that battery 200 is charged (externally charged) with electric power supplied from a charging facility.

Electrically powered vehicle 100 further includes a travel drive unit 110, an HMI (Human Machine Interface) device 120, a hazard lamp 140, an external display 160, an air conditioner 170, a plurality of windows 180, an exhaust unit 190, and a drive wheel W.

Travel drive unit 110 includes a PCU (Power Control Unit) and an MG (Motor Generator) (not shown), and is configured to cause electrically powered vehicle 100 to travel with electric power stored in battery 200. The PCU includes, for example, an inverter, a converter, and a relay (hereinafter referred to as "SMR (System Main Relay)"). The PCU is controlled by ECU 150.

The MG is, for example, a three-phase AC motor generator. The MG is driven by the PCU, and is configured to rotate drive wheel W. The PCU drives the MG with electric power supplied from battery 200. The MG is configured to perform regenerative power generation and supply the generated power to battery 200. The SMR is configured to switch between connection and disconnection of a power path from battery 200 to the PCU. The SMR is set to a closed state (connected state) during travel of electrically powered vehicle 100.

HMI device 120 includes an input device and a display device. HMI device 120 may include a touch panel display. HMI device 120 is an example of "notification device" that notifies a user of information about electrically powered vehicle 100.

Hazard lamp 140 is a lamp disposed at each of the front, rear, right, and left sides of electrically powered vehicle 100. Hazard lamp 140 is the same lamp as a direction indicator, and functions as an emergency flashing indicator light. External display 160 is, for example, an LED display. External display 160 is provided on a rear window, and allows display contents to be viewed from outside electrically powered vehicle 100. Note that hazard lamp 140 or external display 160 may function as the "notification device" that notifies the user of information about electrically powered vehicle 100.

Air conditioner 170 is a device that adjusts a room temperature in a vehicle compartment. Air conditioner 170 is controlled by ECU 150. Air conditioner 170 will be described in detail later. The plurality of windows 180 are openable and closable windows that shield the inside of the vehicle compartment from outside air. Windows 180 may include, for example, a side window and a not shown sunroof of electrically powered vehicle 100. The opening and closing of the plurality of windows 180 is controlled by ECU 150.

Exhaust unit 190 is configured to exhaust air from inside the vehicle compartment to outside electrically powered vehicle 100. For example, exhaust unit 190 is configured to be capable of being opened and closed by ECU 150, and exhausts the air from inside the vehicle compartment when in an opened state. As shown in Fig. 1, exhaust unit 190 is provided at the bottom within the vehicle compartment. Although Fig. 1 shows only one exhaust unit 190, a plurality of exhaust units 190 may be provided. For example, exhaust unit 190 may be provided on each of the front and rear sides within the vehicle compartment.

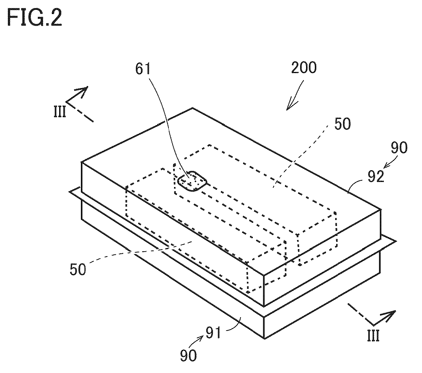

Fig. 2 is a perspective view of battery 200. Battery 200 includes battery case 90 and a battery module 50 housed in battery case 90. Note that battery module 50 is an example of "power storage device."

Battery case 90 includes a lower case 91 and an upper case 92. In the present embodiment, two battery modules 50 are contained in the space formed by lower case 91 and upper case 92. Upper case 92 is provided with a breathable membrane 61. Breathable membrane 61 will be described later. Battery 200 is mounted outside the vehicle compartment of electrically powered vehicle 100. Battery 200 may be mounted inside the vehicle compartment of electrically powered vehicle 100, or may be mounted on the floor of electrically powered vehicle 100.

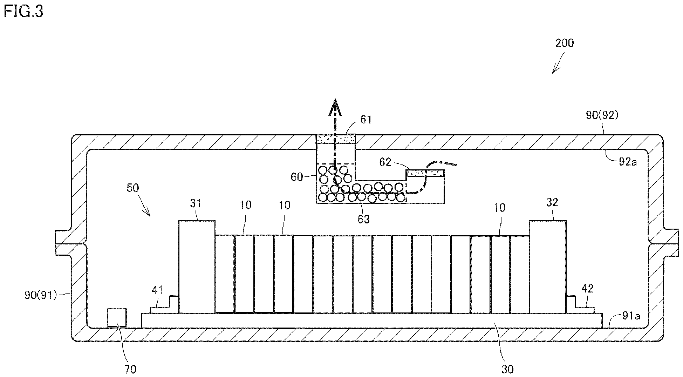

Fig. 3 shows a schematic configuration of battery 200. Fig. 3 is a cross section taken along line III-III in Fig. 2. Battery module 50 is a battery assembly in which a plurality of cells 10 are connected together. The plurality of cells 10 are sulfide-based all-solid-state cells. The plurality of cells 10 are disposed and stacked between end plates 31 and 32 that constitute a pair. In the plurality of cells 10, a sulfur component contained in the plurality of cells 10 may react with moisture in the air to generate hydrogen sulfide, which may be released into battery case 90. Note that the hydrogen sulfide is an example of "gas" of the present disclosure.

The plurality of cells 10 in the state of being stacked are placed between end plates 31 and 32 of the pair, and a predetermined restraint load is applied to the cells by a not shown restraint band or the like. End plates 31 and 32 of the pair are fixed to a bottom plate 30 by brackets 41 and 42, respectively. Battery module 50 including the plurality of cells 10 stacked between end plates 31 and 32 of the pair, bottom plate 30, and the like is fixed to a bottom surface 91a of lower case 91. Battery case 90 is a housing that houses battery module 50.

Upper case 92 is provided with a duct 60. Duct 60 is a communication passage through which the inside and outside of battery case 90 are in communication with each other, and allows air to be exhausted from inside battery case 90 to outside when an internal pressure of battery case 90 increases, and allows external air (outside air) to be taken in when the internal pressure of battery case 90 decreases. Duct 60 is attached to an opening formed in a ceiling surface 92a of upper case 92.

Breathable membranes 61 and 62 each formed from an air-permeable and waterproof (moisture-permeable and waterproof) sheet are provided at end portions of duct 60. The air-permeable and waterproof (moisture-permeable and waterproof) sheet may be, for example, GORE-TEX^{®}. A desulfurizing agent 63 is disposed inside duct 60. Desulfurizing agent 63 may be, for example, a desulfurizing agent in the form of pellets containing iron oxide as a main component, and chemically adsorbs hydrogen sulfide. When the internal pressure of battery case 90 increases, the air is exhausted from inside battery case 90 to outside through duct 60 as indicated by a dashed-and-dotted line arrow. At this time, hydrogen sulfide contained in the air is chemically adsorbed by desulfurizing agent 63, and the hydrogen sulfide is removed. As described above, duct 60 has the function of a desulfurizing unit.

Hydrogen sulfide sensor 70 is disposed inside battery case 90. Hydrogen sulfide sensor 70 is a sensor that detects a concentration of hydrogen sulfide (H₂S) contained in the atmosphere, and outputs a signal indicating a result of detection to ECU 150 (signal receiving unit 154). Hydrogen sulfide sensor 70 may be, for example, a hot wire type semiconductor sensor or a constant potential electrolytic sensor. In the present embodiment, one hydrogen sulfide sensor 70 is provided on bottom surface 91a of lower case 91 around battery module 50. Hydrogen sulfide sensor 70 is an example of "detection device." Note that the position and the number of hydrogen sulfide sensor(s) 70 are not limited to those in the above example.

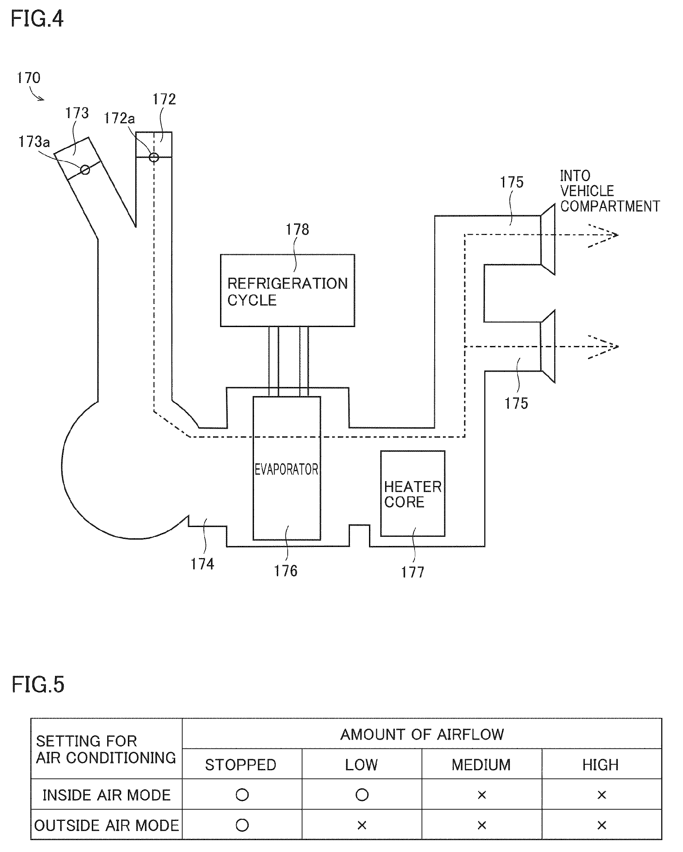

Fig. 4 shows a detailed configuration of air conditioner 170. Air conditioner 170 includes an inside air intake unit 172, an outside air intake unit 173, a duct 174, an exhaust unit 175, an evaporator 176, a heater core 177, and a refrigeration cycle 178. An exemplary flow of air is indicated by a dashed-and-dotted line in Fig. 4.

Inside air intake unit 172 is an inlet for circulation of inside air, which draws in air in the vehicle compartment and introduces it into duct 174. Inside air intake unit 172 is provided with an electromagnetic valve 172a for controlling conduction of inside air intake unit 172. The opening and closing of electromagnetic valve 172a is controlled by ECU 150.

Outside air intake unit 173 is an inlet for circulation of outside air, which draws in outside air and introduces it into duct 174. Outside air intake unit 173 is provided with an electromagnetic valve 173a for controlling conduction of outside air intake unit 173. The opening and closing of electromagnetic valve 173a is controlled by ECU 150. Exhaust unit 175 exhausts the air that has flowed through duct 174 into the vehicle compartment.

Each of evaporator 176 and heater core 177 is provided in duct 174. Evaporator 176 cools the air flowing through duct 174. Heater core 177 raises the temperature of the air flowing through duct 174. Evaporator 176 is connected to refrigeration cycle 178.

ECU 150 controls which of inside air intake unit 172 and outside air intake unit 173 introduces the air into duct 174. Specifically, ECU 150 controls an air circulation path by controlling the opening and closing of each of electromagnetic valve 172a and electromagnetic valve 173a.

A mode that employs an air circulation path through which the air is introduced from inside air intake unit 172 into duct 174 to circulate the air in the vehicle compartment is an example of "inside air mode" of the present disclosure. A mode that employs an air circulation path through which the air is introduced from outside air intake unit 173 into duct 174 to take the outside air into the vehicle compartment is an example of "outside air mode" of the present disclosure. ECU 150 switches an operation mode between the inside air mode and the outside air mode by controlling air conditioner 170.

Air conditioner 170 can adjust an amount of airflow in the vehicle compartment by changing a rotational speed of a not shown fan. ECU 150 adjusts the amount of airflow in the vehicle compartment by controlling the fan provided in air conditioner 170.

Here, hydrogen sulfide generated in battery case 90 is adsorbed by desulfurizing agent 63 in duct 60, but may be partially discharged to the outside air through breathable membrane 61. It is therefore desired to suppress entry of the hydrogen sulfide discharged to the outside air into the vehicle compartment.

In electrically powered vehicle 100 of the present embodiment, therefore, when hydrogen sulfide is generated from battery 200 in battery case 90, ECU 150 suppresses the entry of the generated gas into the vehicle compartment by controlling air conditioner 170.

The setting of air conditioner 170 is described. Fig. 5 shows an exemplary setting of air conditioner 170. As shown in Fig. 5, the setting of air conditioner 170 allows adjustment of the amount of airflow in the vehicle compartment, and switching of the operation mode between the inside air mode of circulating the air in the compartment and the outside air mode of taking the outside air into the vehicle compartment.

For example, the amount of airflow can be adjusted to a plurality of levels of STOPPED, LOW, MEDIUM, and HIGH. The STOPPED indicates that the amount of airflow is zero. A range is set for each of the LOW, MEDIUM, and HIGH, and each range may be further adjustable to a plurality of levels. Circles and crosses in Fig. 5 indicate whether there is a possibility of hydrogen sulfide entering the vehicle compartment within five minutes after the hydrogen sulfide is detected. A circle indicates that there is no possibility of the hydrogen sulfide entering the vehicle compartment, whereas a cross indicates that there is a possibility of the hydrogen sulfide entering the vehicle compartment.

As shown in Fig. 5, when the amount of airflow is equal to or lower than the LOW which is a specified value or is STOPPED in the inside air mode, the hydrogen sulfide does not enter the vehicle compartment. When the amount of airflow exceeds the LOW which is the specified value (the amount of airflow is MEDIUM or HIGH) in the inside air mode, on the other hand, there is a possibility of the hydrogen sulfide entering the vehicle compartment. When the amount of airflow is STOPPED in the outside air mode, there is no possibility of the hydrogen sulfide entering the vehicle compartment. When the amount of airflow is LOW, MEDIUM, or HIGH in the outside air mode, on the other hand, there is a possibility of the hydrogen sulfide entering the vehicle compartment.

When the generation of hydrogen sulfide is detected, therefore, it is desired to set the amount of airflow to be equal to or lower than the LOW or to the STOPPED in the inside air mode, and to set the amount of airflow to the STOPPED in the outside air mode. Note that in the outside air mode, even if the amount of airflow is STOPPED, there is a possibility of the hydrogen sulfide entering duct 174 because electromagnetic valve 173a for controlling the conduction of outside air intake unit 173 is in an opened state. When the generation of hydrogen sulfide is detected, therefore, it is desired to set the inside air mode instead of the outside air mode.

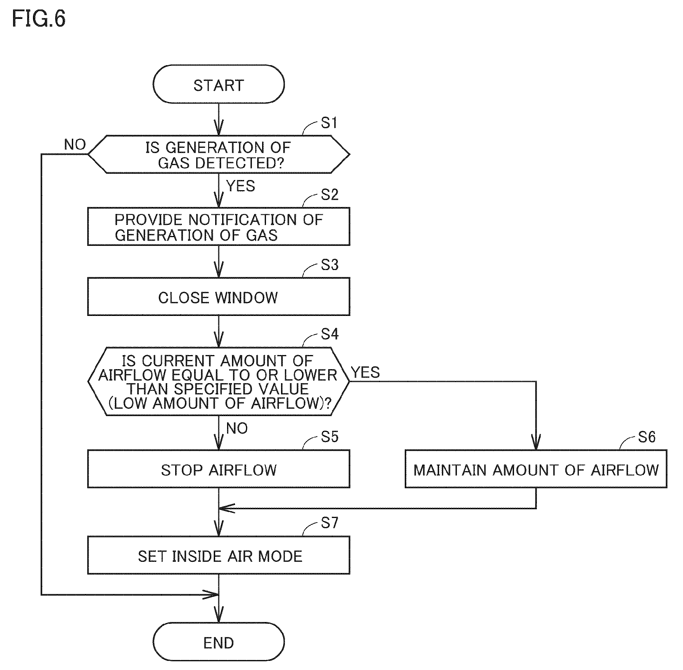

Next, a method for controlling electrically powered vehicle 100 is described. Fig. 6 is a flowchart showing an exemplary process performed by ECU 150. A series of steps shown in this flowchart is repeatedly performed at predetermined intervals.

In step (step is hereinafter abbreviated as S) 1, ECU 150 detects generation of a gas on the condition that a detected value from hydrogen sulfide sensor 70 is larger than a predetermined threshold value. When the generation of the gas is not detected in S1 (NO in S1), ECU 150 ends the process.

When the generation of the gas is detected in S1 (YES in S1), ECU 150 notifies the user of electrically powered vehicle 100 of the generation of the gas (that the detected value of hydrogen sulfide has exceeded the threshold value) (S2). For example, ECU 150 causes HMI device 120 of electrically powered vehicle 100 to display a message indicating that the detected value of hydrogen sulfide is high. Alternatively, ECU 150 may provide a notification to the user by lighting a lamp, by sound, or the like.

Then, ECU 150 performs a step of closing at least one window (S3). For example, ECU 150 closes all of the plurality of windows 180. Specifically, ECU 150 outputs a signal for closing windows 180 to a not shown drive unit that drives windows 180.

Then, ECU 150 determines whether or not a current amount of airflow is equal to or lower than the specified value (LOW amount of airflow) (S4). For example, ECU 150 determines the current amount of airflow based on a signal from the not shown fan. When it is determined that the current amount of airflow exceeds the specified value (the amount of airflow is MEDIUM or HIGH) (NO in S4), ECU 150 stops the airflow (S5). Note that S5 is not limited to the stopping of the airflow, but may be control of reducing the amount of airflow to be equal to or lower than the specified value.

When it is determined that the current amount of airflow is equal to or lower than the specified value (LOW amount of airflow) in S4 (YES in S4), ECU 150 maintains the current amount of airflow (S6). After S5 or S6, ECU 150 sets the inside air mode for air conditioner 170 (S7), and ends the process.

In the case described above, the current amount of airflow is maintained in S6 of Fig. 6 when it is determined that the current amount of airflow is equal to or lower than the specified value (LOW amount of airflow) (YES in S4). However, the airflow may be stopped as shown in S5 regardless of whether or not the current amount of airflow is equal to or lower than the specified value.

As described above, in the present embodiment, when hydrogen sulfide sensor 70 detects the generation of the gas, ECU 150 switches the operation mode to the inside air mode (S7), after setting the amount of airflow from air conditioner 170 to be equal to or lower than the specified value (LOW amount of airflow) (S6) or after stopping the airflow (S5). Thus, electrically powered vehicle 100 can suppress the entry of the gas, which has been generated by the difference in air pressure during switching of the circulation path in air conditioner 170 due to the amount of airflow exceeding the specified value, into the vehicle compartment.

In the embodiment described above, when hydrogen sulfide sensor 70 detects the generation of the gas, ECU 150 determines the current amount of airflow from air conditioner 170 (S4), sets the amount of airflow from air conditioner 170 to be equal to or lower than the specified value when the determined amount of airflow is higher than the specified value (LOW amount of airflow) (S6), and maintains the current amount of airflow when the determined amount of airflow is equal to or lower than the specified value (S6). Thus, electrically powered vehicle 100 can suppress the entry of the gas, which has been generated by the difference in air pressure during switching of the circulation path in air conditioner 170 due to the amount of airflow exceeding the specified value, into the vehicle compartment.

In the embodiment described above, electrically powered vehicle 100 includes the plurality of windows 180 that are openable and closable and shield the inside of the vehicle compartment from outside air. ECU 150 controls the opening and closing of the plurality of windows 180. When hydrogen sulfide sensor 70 detects the generation of the gas, ECU 150 closes the plurality of windows 180 (S3). Thus, electrically powered vehicle 100 can suppress the entry of the gas into the vehicle compartment. Note that ECU 150 may close only some of the plurality of windows 180. ECU 150 may close windows 180 to such an extent that a small gap is formed, instead of completely closing windows 180.

In the embodiment described above, electrically powered vehicle 100 includes HMI device 120 that notifies the user of information about electrically powered vehicle 100. When hydrogen sulfide sensor 70 detects the generation of the gas, ECU 150 provides a notification of the generation of the gas by HMI device 120 (S2). Thus, electrically powered vehicle 100 can readily notify the user of the generation of the gas.

The present disclosure relates to a control method for controlling electrically powered vehicle 100 in which battery module 50 is mounted on a vehicle body. The control method includes, when hydrogen sulfide sensor 70 detects the generation of the gas, setting the amount of airflow from air conditioner 170 to be equal to or lower than the specified value (LOW amount of airflow) (S6) or stopping the airflow (S5), and switching the operation mode to the inside air mode (S7) after the setting the amount of airflow or stopping the airflow. Thus, the control method of the present embodiment can suppress the entry of the gas, which has been generated by the difference in air pressure during switching of the circulation path in air conditioner 170 due to the amount of airflow exceeding the specified value, into the vehicle compartment.

Here, when an internal short circuit occurs in cell 10, the amount of current increases and the temperature rises in cell 10. Electrically powered vehicle 100 may detect generation of hydrogen sulfide by detecting the rise in temperature of cell 10 through a temperature sensor or the like.

When hydrogen sulfide is generated in cell 10, there are locations where the pressure changes. Electrically powered vehicle 100 may detect generation of hydrogen sulfide based on an increase in a detected value from a pressure sensor, by disposing the pressure sensor at a location where the pressure changes.

### (Second Embodiment)

In the case described in the first embodiment, there are provided two electromagnetic valves, namely, electromagnetic valve 172a for controlling the conduction of inside air intake unit 172 and electromagnetic valve 173a for controlling the conduction of outside air intake unit 173. A second embodiment describes a configuration in which the conduction of inside air intake unit 172 and outside air intake unit 173 is controlled by one electromagnetic valve 179.

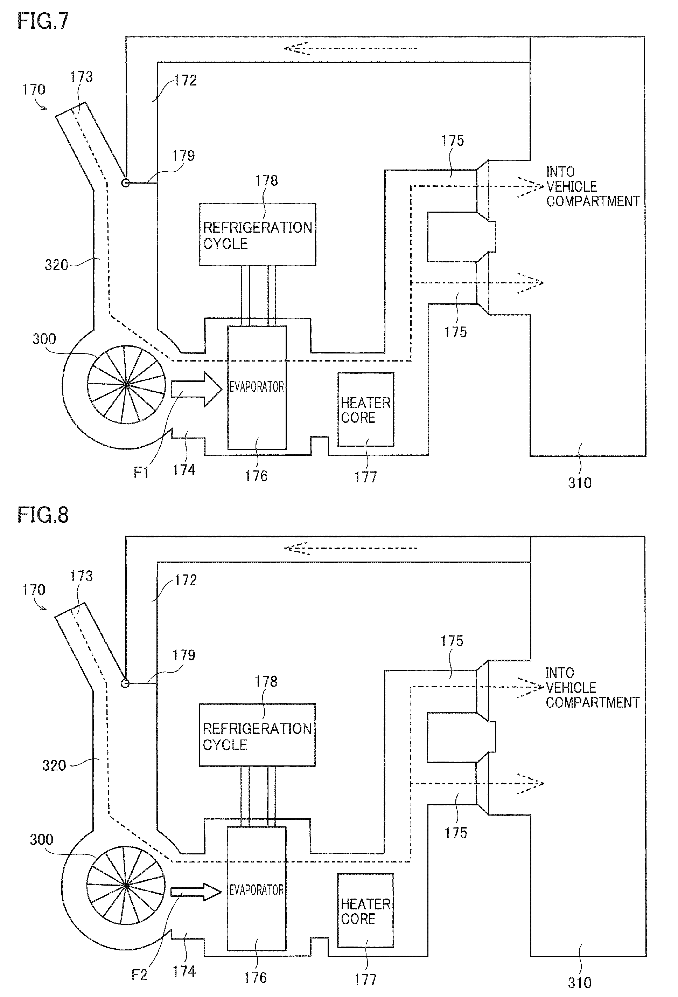

Fig. 7 shows a state of air conditioner 170 before the amount of airflow is changed. Fig. 8 shows a state of air conditioner 170 after the amount of airflow is changed. As shown in Figs. 7 and 8, in the second embodiment, one electromagnetic valve 179 is provided at a branch position between inside air intake unit 172 and outside air intake unit 173. Additionally, in the second embodiment, a fan 300 not shown in the first embodiment is shown inside air conditioner 170. Additionally, in the second embodiment, a vehicle compartment 310 not shown in the first embodiment is shown. Here, vehicle compartment 310 and an air conditioning space 320 are formed in the vehicle. Air conditioning space 320 is a space defined within air conditioner 170, and includes inside air intake unit 172, outside air intake unit 173, duct 174, exhaust unit 175, and the like. ECU 150 adjusts the amount of air flowing into vehicle compartment 310 from air conditioning space 320 by controlling the rotational speed of fan 300.

The amount of airflow from air conditioner 170 is adjusted based on, for example, a map of an amount of airflow corresponding to the difference between a set temperature and an outside air temperature. Such a map is stored in storage device 153. For example, the map specifies that the amount of airflow is to be increased when the difference between the set temperature and the outside air temperature is large, and that the amount of airflow is to be reduced when the difference between the set temperature and the outside air temperature is small. The amount of airflow may be changed using a corresponding map, or using a value obtained by multiplying an output by a predetermined number with respect to the map. The amount of airflow may be changed using a mathematical expression or the like, instead of the map.

Although battery 200 is a sulfide-based all-solid-state battery in the case described in the first embodiment, battery 200 is not limited to the solid-state battery. Battery 200 may be a lithium-ion battery, an LFP battery (iron phosphate lithium-ion battery) having an electrolyte solution, and the like. In the first embodiment, hydrogen sulfide is described as an example of "gas." The "gas" may be other than the hydrogen sulfide. For example, the "gas" may be carbon dioxide, carbon monoxide, hydrogen fluoride, hydrocarbon-based gases and the like, and includes various types of gases generated by combustion in the power storage device. In any case, it is undesirable for a gas harmful to humans to enter vehicle compartment 310.

In the first embodiment, hydrogen sulfide sensor 70 that detects the concentration of hydrogen sulfide is described as an example of "detection device." The "detection device" may detect generation of a gas other than the hydrogen sulfide described above. Alternatively, instead of detecting the generation of the gas, it may be detected that the generation of the gas is predicted.

It may be detected that the generation of the gas is predicted by, for example, a method for detecting a temperature rise in battery 200 through a temperature sensor or the like. When a value of the temperature sensor is higher than a specified value, ECU 150 can predict that the gas will be generated in the future. It may be predicted that the gas will be generated in the future based on a detected value from a pressure sensor, by installing a seal member in battery 200 and providing the pressure sensor adjacent to the seal member. Battery 200 may experience an increase in internal pressure and thus an increase in pressure on the seal member due to breakage. When the detected value from the pressure sensor is higher than a specified value, ECU 150 can predict that the gas will be generated in the future.

It may be detected that the generation of the gas is predicted when a detected value from a strain gauge, a displacement sensor or the like exceeds a specified value. It may be detected that the generation of the gas is predicted using at least one or more of the various sensors that detect the state of battery 200 included in monitoring module 130. It may be detected that the generation of the gas is predicted when a voltage change, a current change or the like in battery 200 falls out of a reference range, or by any method.

As shown in Fig. 7, ECU 150 controls fan 300 in the outside air mode to cause fluid to flow into vehicle compartment 310 at an amount of airflow F1. The state in Fig. 7 is an example of "comparative state." The "comparative state" includes a state in which hydrogen sulfide sensor 70 does not detect generation of hydrogen sulfide, and a state in which hydrogen sulfide sensor 70 does not detect that the generation of the hydrogen sulfide is predicted.

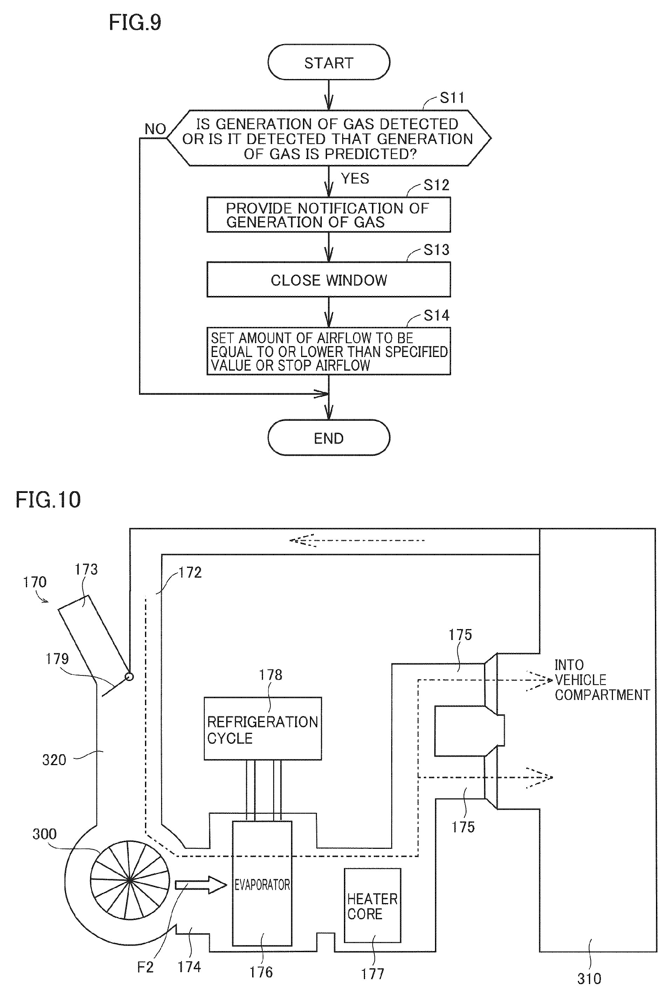

As shown in Fig. 8, when hydrogen sulfide sensor 70 detects generation of hydrogen sulfide or detects that the generation of the hydrogen sulfide is predicted, ECU 150 controls fan 300 to attain an amount of airflow F2 lower than amount of airflow F1 as compared to the comparative state. An exemplary process performed by ECU 150 to change amount of airflow F1 to amount of airflow F2 in this manner is described. Fig. 9 is a flowchart showing an exemplary process performed by ECU 150.

In S11, ECU 150 determines, based on a detected value from hydrogen sulfide sensor 70, whether or not generation of a gas has been detected or it has been detected that the generation of the gas is predicted. For example, ECU 150 may detect generation of a gas based on a signal from hydrogen sulfide sensor 70, and may detect that the generation of the gas is predicted based on detected values from the above-described various sensors that detect that the generation of the gas is predicted.

When the generation of the gas has not been detected or it has not been detected that the generation of the gas is predicted in S11 (NO in S11), ECU 150 ends the process. When the generation of the gas has been detected or it has been detected that the generation of the gas is predicted in S11 (YES in S11), ECU 150 notifies the user of electrically powered vehicle 100 of the generation of the gas (or that the generation of the gas is predicted) (S12). For example, ECU 150 causes HMI device 120 of electrically powered vehicle 100 to display a message indicating the generation of the gas or that the generation of the gas is predicted. Alternatively, ECU 150 may provide a notification to the user by lighting a lamp, by sound, or the like. Note that the notification may be provided to the user differently depending on whether the generation of the gas has been detected or it has been detected that the generation of the gas is predicted.

Then, ECU 150 performs a step of closing at least one window (S13). Here, when electrically powered vehicle 100 travels in a state in which a gas is generated, the generated gas may flow in through the plurality of windows 180. Specifically, when at least some the plurality of windows 180 are open, the generated gas may enter vehicle compartment 310 through the open portions due to the diffusion effect of air in which the air moves from an area of higher concentration to an area of lower concentration, or due to the influence of a flow or air generated by an increase in speed of electrically powered vehicle 100. Therefore, ECU 150 controls all of the plurality of windows 180 to be closed by outputting a signal for closing windows 180 to the not shown drive unit that drives windows 180.

Then, ECU 150 sets the amount of airflow to be equal to or lower than a specified value by controlling fan 300, or stops fan 300 (S14). In S14, when the current amount of airflow exceeds the specified value (the amount of airflow is MEDIUM or HIGH), for example, ECU 150 sets the amount of airflow to be equal to or lower than the specified value (LOW amount of airflow). Alternatively, ECU 150 may stop the airflow in S 14. Through the process of S11 to S14, the entry of the generated gas into vehicle compartment 310 can be suppressed. Note that the entry of the gas into vehicle compartment 310 can be suppressed by performing only S14 without performing S12 and S13. Similarly, in other examples described below, the process corresponding to S12 and S13 may not be provided.

### (First Modification)

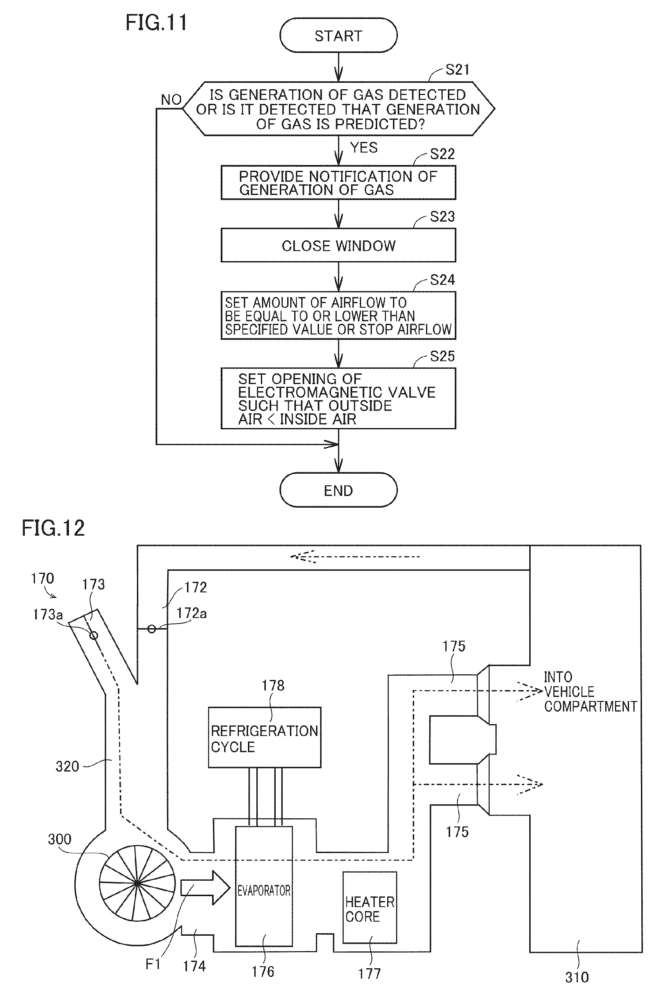

A first modification is different from the second embodiment in the method for controlling electromagnetic valve 179. Fig. 10 shows a state of air conditioner 170 after the amount of airflow is changed in the first modification. Fig. 10 corresponds to a diagram showing a state changed from the state before the amount of airflow is changed in Fig. 7. Fig. 11 is a flowchart showing an exemplary process performed by ECU 150. The control method in the first modification is described with reference to Figs. 10 and 11.

As shown in Fig. 10, when generation of a gas is detected or it is detected that the generation of the gas is predicted, ECU 150 controls fan 300 to attain amount of airflow F2 lower than amount of airflow F1 as compared to the comparative state shown in Fig. 7. ECU 150 further reduces the amount of outside air to be taken into vehicle compartment 310 by adjusting the opening of electromagnetic valve 179 such that electromagnetic valve 179 is moved from inside air intake unit 172 to outside air intake unit 173. In other words, ECU 150 reduces the amount of outside air to be taken into vehicle compartment 310 and increases the amount of inside air to be taken into vehicle compartment 310 by adjusting the opening of electromagnetic valve 179.

An exemplary process performed by ECU 150 is described. Fig. 11 is a flowchart showing an exemplary process performed by ECU 150. A process of S21 to S24 in Fig. 11 is similar to the process of S11 to S14 in Fig. 9, and therefore will not be described herein. After S24, ECU 150 sets the opening of electromagnetic valve 179 such that the amount of inside air is greater than the amount of the outside air (S25). Thus, ECU 150 reduces the amount of outside air to be taken into vehicle compartment 310 and increases the amount of inside air to be taken into vehicle compartment 310.

Through the process of S21 to S25, when the generation of the gas is detected or it is detected that the generation of the gas is predicted, ECU 150 reduces the amount of airflow from air conditioner 170 as compared to that in the comparative state shown in Fig. 7, and also reduces the amount of outside air to be taken into vehicle compartment 310 after reducing the amount of airflow. When the generation of the gas is detected or it is detected that the generation of the gas is predicted, ECU 150 reduces the amount of outside air to be taken into vehicle compartment 310, after setting the amount of airflow to be equal to or lower than the specified value or after stopping the airflow.

Here, since the amount of outside air to be taken into vehicle compartment 310 and the amount of inside air to be taken into vehicle compartment 310 are adjusted by one electromagnetic valve 179 as shown in Fig. 10, reducing the amount of outside air to be taken into vehicle compartment 310 increases the amount of inside air to be taken into vehicle compartment 310. As described above, when the generation of the gas is detected or it is detected that the generation of the gas is predicted, ECU 150 reduces the amount of airflow from air conditioner 170 as compared to that in the comparative state, and also reduces the amount of outside air to be taken into vehicle compartment 310 and increases the amount of inside air to be taken into vehicle compartment 310 after reducing the amount of airflow. When the generation of the gas is detected or it is detected that the generation of the gas is predicted, ECU 150 reduces the amount of outside air to be taken into vehicle compartment 310 and increases the amount of inside air to be taken into vehicle compartment 310, after setting the amount of airflow from air conditioner 170 to be equal to or lower than the specified value or after stopping the airflow.

As shown in Fig. 11, in the first modification, electromagnetic valve 179 is moved after the amount of airflow is reduced, which makes it possible to suppress the influence of air on the operation of electromagnetic valve 179, thereby allowing for accurate setting of the opening of electromagnetic valve 179. Thus, the amount of outside air entering vehicle compartment 310 can be reliably reduced.

### (Second Modification)

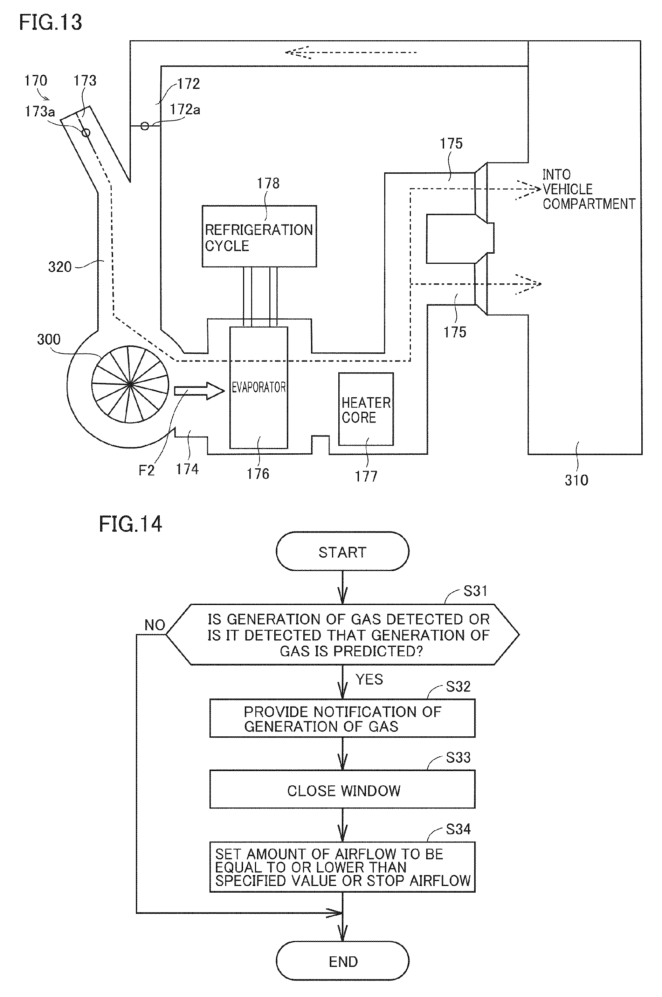

A second modification is different from the first embodiment in the method for controlling electromagnetic valves 172a and 173a. Fig. 12 shows a state of air conditioner 170 before the amount of airflow is changed in the second modification. Fig. 13 shows a state of air conditioner 170 after the amount of airflow is changed in the second modification. Fig. 14 is a flowchart showing an exemplary process performed by ECU 150. The control method in the second modification is described with reference to Figs. 12 to 14.

As shown in Fig. 12, in the comparative state including a state in which generation of a gas is not detected and a state in which hydrogen sulfide sensor 70 does not detect that generation of hydrogen sulfide is predicted, ECU 150 closes electromagnetic valve 172a and fully opens electromagnetic valve 173a. As shown in Fig. 12, ECU 150 controls fan 300 in such an outside air mode to cause fluid to flow into vehicle compartment 310 at amount of airflow F1.

As shown in Fig. 13, when generation of a gas is detected or it is detected that the generation of the gas is predicted, ECU 150 controls fan 300 to attain amount of airflow F2 lower than amount of airflow F1 as compared to the comparative state, without changing the openings of electromagnetic valves 172a and 173a.

As shown in Fig. 14, in S31, ECU 150 determines whether or not generation of a gas has been detected or it has been detected that the generation of the gas is predicted. When the generation of the gas has not been detected or it has not been detected that the generation of the gas is predicted in S31 (NO in S31), ECU 150 ends the process. When the generation of the gas has been detected or it has been detected that the generation of the gas is predicted in S31 (YES in S31), ECU 150 notifies the user of electrically powered vehicle 100 of the generation of the gas (or that the generation of the gas is predicted) (S32).

Then, ECU 150 performs a step of closing at least one window (S33). Then, ECU 150 sets the amount of airflow to be equal to or lower than a specified value by controlling fan 300, or stops fan 300 (S34). In S34, when the current amount of airflow exceeds the specified value (the amount of airflow is MEDIUM or HIGH), for example, ECU 150 sets the amount of airflow to be equal to or lower than the specified value (LOW amount of airflow). Alternatively, ECU 150 may stop the airflow in S34. As described above, in the second modification, since there are provided two electromagnetic valves 172a and 173a, the operation mode can be switched between the inside air mode and the outside air mode by the operation of the valves smaller than one valve, which makes it possible to suppress resistance of air generated due to the operation of the valves, and suppress the entry of the generated gas into vehicle compartment 310 without changing the positions of the valves in the outside air mode shown in Fig. 13.

### (Third Modification)

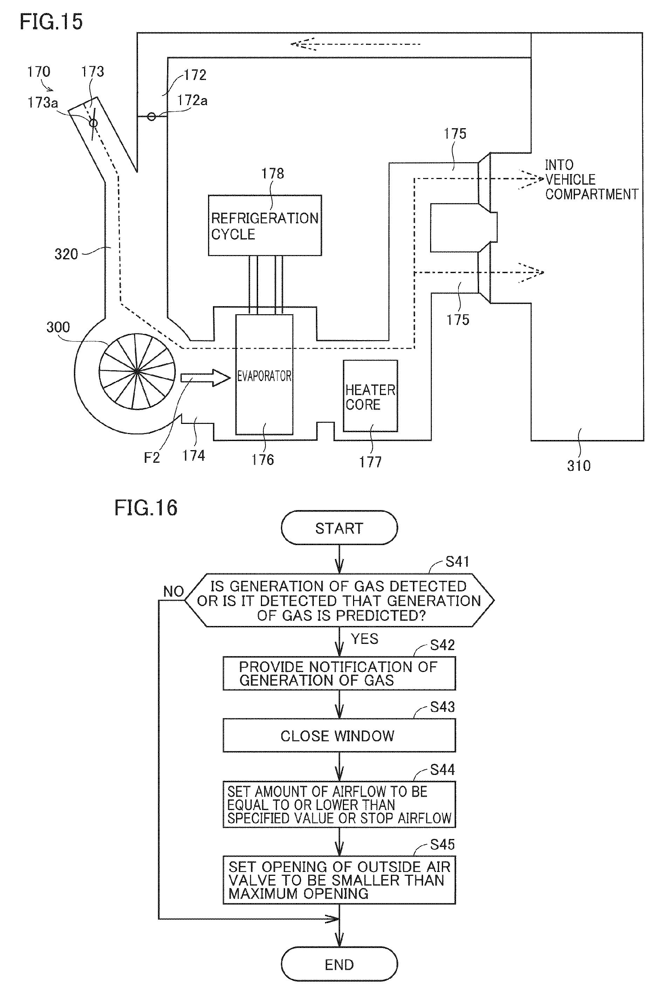

A third modification is different from the first embodiment in the method for controlling electromagnetic valves 172a and 173a. Fig. 15 shows a state of air conditioner 170 after the amount of airflow is changed in the third modification. Fig. 15 corresponds to a diagram showing a state changed from the state before the amount of airflow is changed in Fig. 12. Fig. 16 is a flowchart showing an exemplary process performed by ECU 150. The control method in the third modification is described with reference to Figs. 15 and 16.

As shown in Fig. 15, when generation of a gas is detected or it is detected that the generation of the gas is predicted, ECU 150 controls fan 300 to attain amount of airflow F2 lower than amount of airflow F1 as compared to the comparative state shown in Fig. 12. ECU 150 further sets electromagnetic valves 172a and 173a such that electromagnetic valve 172a of inside air intake unit 172 remains closed and the opening of electromagnetic valve 173a of outside air intake unit 173 is decreased (made smaller). Thus, ECU 150 reduces the amount of outside air to be taken into vehicle compartment 310.

An exemplary process performed by ECU 150 is described. A process of S41 to S44 in Fig. 16 is similar to the process of S31 to S34 in Fig. 14, and therefore will not be described herein. After S44, ECU 150 sets the opening of electromagnetic valve 173a to be smaller than the full opening which corresponds to the maximum opening (S45). Thus, ECU 150 reduces the amount of outside air to be taken into vehicle compartment 310.

When the generation of the gas is detected or it is detected that the generation of the gas is predicted, ECU 150 reduces the amount of airflow from air conditioner 170 as compared to that in the comparative state shown in Fig. 12, and also reduces the amount of outside air to be taken into vehicle compartment 310 after reducing the amount of airflow. When the generation of the gas is detected or it is detected that the generation of the gas is predicted, ECU 150 reduces the amount of outside air to be taken into vehicle compartment 310, after setting the amount of airflow to be equal to or lower than the specified value or after stopping the airflow.

As described above, in the third modification, since there are provided two electromagnetic valves 172a and 173a, the amount of circulation of inside air and the amount of intake of outside air can be finely adjusted individually. Thus, in the third modification, it is possible to suppress the entry of the generated gas into vehicle compartment 310 while finely adjusting the amount of intake of outside air, particularly in the outside air mode.

### (Fourth Modification)

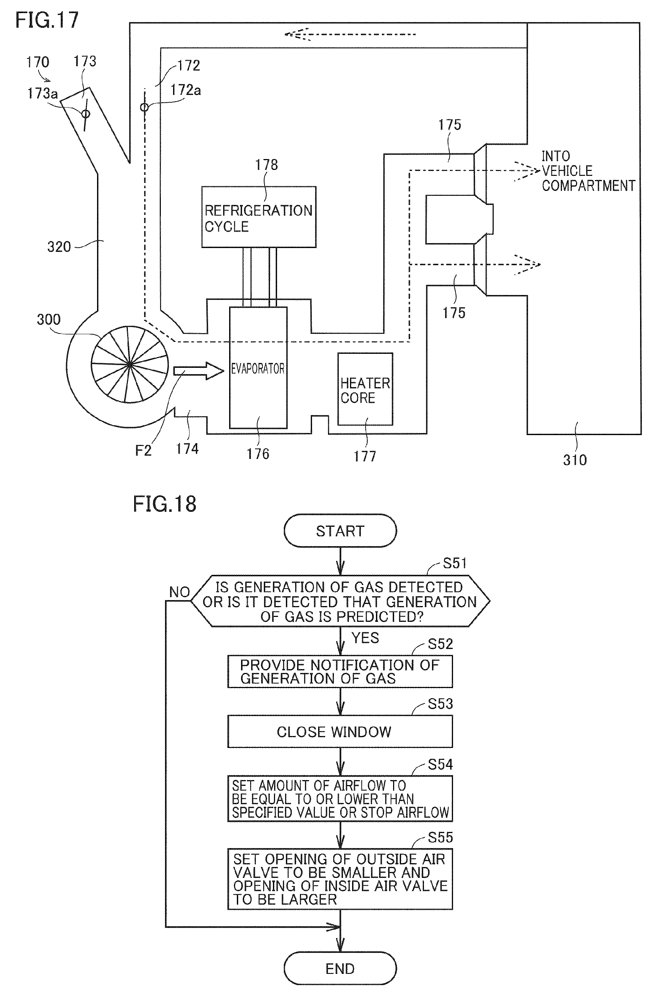

A fourth modification is different from the first embodiment in the method for controlling electromagnetic valves 172a and 173a. Fig. 17 shows a state of air conditioner 170 after the amount of airflow is changed in the fourth modification. Fig. 17 corresponds to a diagram showing a state changed from the state before the amount of airflow is changed in Fig. 12. Fig. 18 is a flowchart showing an exemplary process performed by ECU 150. The control method in the fourth modification is described with reference to Figs. 17 and 18.

As shown in Fig. 17, when generation of a gas is detected or it is detected that the generation of the gas is predicted, ECU 150 controls fan 300 to attain amount of airflow F2 lower than amount of airflow F1 as compared to the comparative state shown in Fig. 12. ECU 150 further sets electromagnetic valves 172a and 173a such that electromagnetic valve 172a of inside air intake unit 172 is fully opened and the opening of electromagnetic valve 173a of outside air intake unit 173 is decreased (made smaller). Thus, ECU 150 reduces the amount of outside air to be taken into vehicle compartment 310 and increases the amount of inside air to be taken into vehicle compartment 310.

An exemplary process performed by ECU 150 is described. A process of S51 to S54 in Fig. 18 is similar to the process of S31 to S34 in Fig. 14, and therefore will not be described herein. After S54, ECU 150 sets the opening of electromagnetic valve 173a of outside air intake unit 173 to be smaller than that in the comparative state, and sets the opening of electromagnetic valve 172a of inside air intake unit 172 to be larger than that in the comparative state (S55).

When the generation of the gas is detected or it is detected that the generation of the gas is predicted, ECU 150 reduces the amount of airflow from air conditioner 170 as compared to that in the comparative state shown in Fig. 12, and also reduces the amount of outside air to be taken into vehicle compartment 310 and increases the amount of inside air to be taken into vehicle compartment 310 after reducing the amount of airflow. When the generation of the gas is detected or it is detected that the generation of the gas is predicted, ECU 150 reduces the amount of outside air to be taken into vehicle compartment 310 and increases the amount of inside air to be taken into vehicle compartment 310, after setting the amount of airflow to be equal to or lower than the specified value or after stopping the airflow.

As described above, in the fourth modification, since there are provided two electromagnetic valves 172a and 173a, the amount of circulation of inside air and the amount of intake of outside air can be finely adjusted individually. Thus, in the fourth modification, it is possible to suppress the entry of the generated gas into vehicle compartment 310 while finely adjusting the amount of intake of outside air and suppressing the generation of a pressure difference between an outside air pressure and a pressure inside air conditioning space 320, particularly in the inside air mode where a large amount of inside air can be circulated.

### (Others)

ECU 150 may perform control that combines any of the types of control described above. For example, ECU 150 may perform any of: control of setting the amount of airflow to be equal to or lower than the specified value based on detecting the generation of the gas; control of stopping the airflow based on detecting the generation of the gas; control of setting the amount of airflow to be equal to or lower than the specified value based on detecting that the generation of the gas is predicted; and control of stopping the airflow based on detecting that the generation of the gas is predicted.

Although the embodiments of the present disclosure have been described, it should be understood that the embodiments disclosed herein are illustrative and non-restrictive in every respect. The scope of the present disclosure is defined by the terms of the claims, and is intended to include any modifications within the scope and meaning equivalent to the terms of the claims.

## Claims

1. A vehicle (100) comprising:
a vehicle body;
a power storage device (50) mounted on the vehicle body;
a detection device (70) that detects generation of a gas from the power storage device (50) or detects that the generation of the gas is predicted;
an air conditioner (170) that adjusts an amount of airflow in a vehicle compartment (310); and
a controller (150), wherein
when the detection device (70) detects the generation of the gas or detects that the generation of the gas is predicted, the controller (150) is configured to reduce an amount of airflow from the air conditioner (170) as compared to that in a comparative state, and
the comparative state includes a state in which the detection device (70) does not detect the generation of the gas.

2. The vehicle according to claim 1, wherein
the comparative state further includes a state in which the detection device (70) does not detect that the generation of the gas is predicted.

3. The vehicle according to claim 1 or 2, wherein
the air conditioner (170) is configured to adjust an amount of outside air to be taken into the vehicle compartment (310), and
when the detection device (70) detects the generation of the gas or detects that the generation of the gas is predicted, the controller (150) is configured to reduce the amount of airflow from the air conditioner (170) as compared to that in the comparative state, and is also configured to reduce the amount of outside air to be taken into the vehicle compartment (310) after reducing the amount of airflow.

4. The vehicle according to claim 3, wherein
the air conditioner (170) is configured to adjust an amount of inside air to be taken into the vehicle compartment (310), and
when the detection device (70) detects the generation of the gas or detects that the generation of the gas is predicted, the controller (150) is configured to reduce the amount of airflow from the air conditioner (170) as compared to that in the comparative state, and is also configured to reduce the amount of outside air to be taken into the vehicle compartment (310) and increase the amount of inside air to be taken into the vehicle compartment (310) after reducing the amount of airflow.

5. The vehicle according to claim 4, wherein
the air conditioner (170) is configured to change the amounts of outside air and inside air to be taken into the vehicle compartment (310) by adjusting one switching valve (179).

6. A vehicle (100) comprising:
a vehicle body;
a power storage device (50) mounted on the vehicle body;
a detection device (70) that detects generation of a gas from the power storage device (50) or detects that the generation of the gas is predicted;
an air conditioner (170) that adjusts an amount of airflow in a vehicle compartment (310) and adjusts an amount of outside air to be taken into the vehicle compartment (310); and
a controller (150), wherein
when the detection device (70) detects the generation of the gas or detects that the generation of the gas is predicted, the controller (150) is configured to reduce the amount of outside air to be taken into the vehicle compartment (310), after setting an amount of airflow from the air conditioner (170) to be equal to or lower than a specified value or after stopping the airflow.

7. The vehicle according to claim 6, wherein
the air conditioner (170) is configured to adjust an amount of inside air to be taken into the vehicle compartment (310), and
when the detection device (70) detects the generation of the gas or detects that the generation of the gas is predicted, the controller (150) is configured to reduce the amount of outside air to be taken into the vehicle compartment (310) and increase the amount of inside air to be taken into the vehicle compartment (310), after setting the amount of airflow from the air conditioner (170) to be equal to or lower than the specified value or after stopping the airflow.

8. The vehicle according to claim 7, wherein
the air conditioner (170) is configured to change the amounts of outside air and inside air to be taken into the vehicle compartment (310) by adjusting one switching valve.

9. A vehicle (100) comprising:
a vehicle body;
a power storage device (50) mounted on the vehicle body;
a detection device (70) that detects generation of a gas from the power storage device (50);
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310); and
a controller (150), wherein
when the detection device (70) detects the generation of the gas, the controller (150) is configured to switch the operation mode to the inside air mode, after setting an amount of airflow from the air conditioner (170) to be equal to or lower than a specified value or after stopping the airflow.

10. The vehicle according to claim 9, wherein
when the detection device (70) detects the generation of the gas, the controller (150) is configured to
determine a current amount of airflow from the air conditioner (170),
set the amount of airflow from the air conditioner (170) to be equal to or lower than the specified value when the determined amount of airflow is higher than the specified value, and
maintain the current amount of airflow when the determined amount of airflow is equal to or lower than the specified value.

11. The vehicle according to claim 9 or 10, further comprising at least one window (180) that is openable and closable and shields an inside of the vehicle compartment (310) from outside air, wherein
the controller (150) is configured to control opening and closing of the at least one window (180), and
when the detection device (70) detects the generation of the gas, the controller (150) is configured to close the at least one window (180).

12. The vehicle according to claim 9 or 10, further comprising a notification device (120) that notifies a user of information about the vehicle (100), wherein
when the detection device (70) detects the generation of the gas, the controller (150) is configured to provide a notification of the generation of the gas by the notification device (120).

13. A control method for controlling a vehicle (100) in which a power storage device (50) is mounted on a vehicle body, wherein
the vehicle (100) includes
a detection device (70) that detects generation of a gas from the power storage device (50), and
an air conditioner (170) that adjusts an amount of airflow in a vehicle compartment (310), and switches an operation mode between an inside air mode of circulating air in the vehicle compartment (310) and an outside air mode of taking outside air into the vehicle compartment (310), and
the control method includes, when the detection device (70) detects the generation of the gas,
setting an amount of airflow from the air conditioner (170) to be equal to or lower than a specified value, or stopping the airflow, and
switching the operation mode to the inside air mode after the setting the amount of airflow or stopping the airflow.
